# FASCICULE DE BREVET EUROPEEN

(11) **EP 2 569 599 B1**
(45) Date de publication et mention de la délivrance du brevet: **04.06.2014**
(21) Numéro de dépôt: 11719341.7
(22) Date de dépôt: 07.04.2011
(51) Int. Cl.: G01D 5/14, G01D 5/12

(54) **CAPTEUR DE POSITION UTILISANT UN ELEMENT FERROMAGNETIQUE MOBILE**
POSITIONSSENSOR MIT MOBILEM FERROMAGNETISCHEN ELEMENT
POSITION SENSOR USING A MOVEABLE FERROMAGNETIC ELEMENT

(30) Priorité: 14.04.2010 FR 1052858
(43) Date de publication de la demande: 20.03.2013
(73) Titulaire: Moving Magnet Technologies, 25000 Besançon (FR)
(72) Inventeur: FRACHON, Didier, F-25000 Besançon (FR); BIWERSI, Stéphane, F-25140 Frambouhans (FR)
(74) Mandataire: Breesé, Pierre
(86) Numéro de dépôt international: PCT/FR2011/050783
(87) Numéro de publication internationale: WO 2011/128558

(56) Documents cités:
- FR-A1- 2 845 469
- GB-A- 1 143 508
- US-A- 4 112 408
- US-A- 5 600 238

## Description

La présente invention concerne le domaine des capteurs de position magnétiques, et notamment des capteurs de position absolus linéaires ou rotatifs magnétiques utilisant un ensemble mobile principalement constitué d'un élément ferromagnétique dont la position est détectée.

Plus précisément, la présente invention concerne un capteur magnétique de position linéaire ou angulaire sans contact, comprenant au moins un ensemble statorique et un élément ferromagnétique mobile par rapport à l'ensemble statorique et dont la position est détectée, l'ensemble statorique comprenant lui-même au moins des première et seconde pièces ferromagnétiques, au moins un premier aimant permanent, et au moins un élément magnétosensible soumis à un champ magnétique dépendant de la position de l'élément ferromagnétique mobile et conçu pour délivrer un signal de mesure dépendant du champ magnétique auquel il est soumis, le premier aimant permanent étant solidaire de la première pièce ferromagnétique, et les pièces ferromagnétiques définissant avec l'élément ferromagnétique mobile au moins des premier et second entrefers respectifs.

Un capteur de ce type est décrit dans le brevet US 4 112 408.

Cependant, le capteur décrit dans ce brevet appartient à la classe des encodeurs numériques et ne permet donc de détecter que la présence ou l'absence, dans un entrefer, de l'élément ferromagnétique mobile, ou d'une partie de cet élément.

On connaît par ailleurs, par les brevets GB 1 143 508 et US 5 600 238, des capteurs d'un type voisin dont les deux pièces ferromagnétiques de l'ensemble statorique sont accouplées par l'aimant permanent, et ne forment donc fonctionnellement qu'une seule pièce.

Bien que le capteur du brevet GB 1 143 508 appartienne lui aussi à la classe des encodeurs numériques, le capteur du brevet US 5 600 238 permet en revanche de détecter de façon continument variable la position d'un élément ferromagnétique mobile par rapport à cet ensemble statorique.

Cependant, les contraintes géométriques sévères qu'impose la structure du capteur décrit dans ce brevet US 5 600 238 empêchent son utilisation dans les applications n'autorisant qu'un faible encombrement.

Un autre capteur permettant de détecter de façon continument variable la position de l'élément ferromagnétique mobile par rapport à l'ensemble statorique est par exemple décrit dans le document de brevet FR 2 845 469 de la Demanderesse.

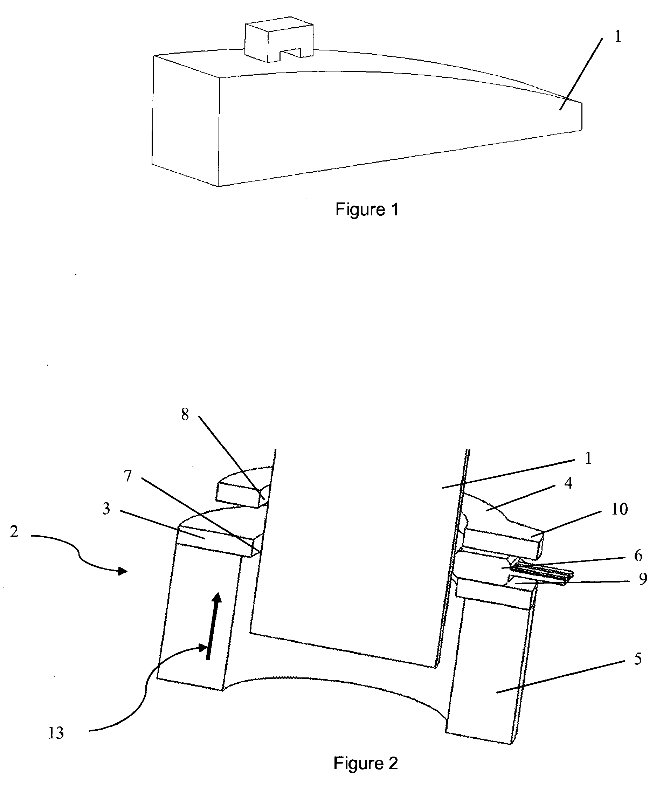

Conformément à l'enseignement de ce document antérieur, l'élément ferromagnétique mobile se déplace en regard de l'aimant permanent, et cet aimant comporte une cavité dans laquelle est intégrée la sonde magnétosensible. La sonde magnétosensible est ainsi soumise à un champ magnétique dont l'amplitude dépend de la position de l'élément ferromagnétique mobile. Cet élément ferromagnétique est lui-même profilé de manière à générer une variation linéaire de l'amplitude du champ magnétique auquel la sonde est sensible (figure 1).

En dépit des avantages qu'elle présente par ailleurs, cette structure connue souffre des limitations suivantes :
- Forte sensibilité aux tolérances mécaniques;
- Décalage important du signal par rapport au point d'induction nulle (0 Gauss) le rendant difficile à compenser en température; et
- Nécessité d'avoir un facteur de forme important pour avoir une variation de signal suffisante.

De ce fait, les capteurs connus ne permettent pas de répondre aisément au besoin de disposer de systèmes de petite taille ou d'offrir une précision élevée en dépit de tolérances importantes de fabrication ou de fonctionnement (tolérance mécanique, température...).

Dans ce contexte, la présente invention a pour but de proposer un capteur exempt de l'une au moins de ces limitations.

A cette fin, le capteur de l'invention, par ailleurs conforme à la définition générique qu'en donne le préambule ci-dessus, est essentiellement caractérisé en ce que le premier aimant permanent est uniquement solidaire de la première pièce ferromagnétique, en ce que les deux pièces ferromagnétiques définissent entre elles au moins un troisième entrefer, et en ce que l'élément magnétosensible est placé dans ce troisième entrefer.

Ainsi, l'invention répond en outre au besoin de pouvoir disposer, pour des raisons de conception, de simplicité ou de robustesse, d'un capteur de position sans contact dont l'élément ferromagnétique mobile est dépourvu de toute pièce rapportée, et notamment d'aimant permanent.

De préférence, l'élément magnétosensible comprend une sonde de Hall sensible à l'amplitude d'au moins une des composantes du champ magnétique dans le troisième entrefer, et peut, par exemple, être constitué par une sonde linéaire programmable de type MLX90251 ou HAL825.

La solution proposée par la présente demande permet, notamment lorsqu'elle est appliquée à une structure axisymétrique, de réduire significativement la sensibilité aux tolérances géométriques. On précisera que, dans l'intégralité de ce document, le terme "axisymétrique" s'appliquera à tout composant présentant au moins sensiblement une symétrie de révolution autour d'un axe colinéaire à la direction de déplacement de l'élément ferromagnétique mobile.

De plus, la présente solution permet, selon des modes de réalisation optimisés, d'obtenir des variations de champ compatibles avec les éléments magnétosensibles utilisés. En particulier, une utilisation pour la mesure de très petits déplacements (typiquement quelques dixièmes de millimètres) pourra être envisagée.

De façon préférentielle mais non limitative, les variations de champ magnétique mesurées se feront autour du 0 Gauss, qui constitue une valeur stable en température, rendant ainsi le capteur nettement moins sensible aux variations de température que la structure de l'art antérieur, et plus aisé à programmer.

Selon un premier mode de réalisation, l'invention concerne un capteur linéaire de position d'un élément ferromagnétique mobile utilisant, outre l'élément ferromagnétique mobile dont la position est détectée, un ensemble statorique comprenant au moins :
- une première pièce ferromagnétique sensiblement axisymétrique,
- un aimant permanent de forme sensiblement cylindrique solidaire de la première pièce ferromagnétique, cet aimant pouvant être aimanté axialement ou radialement,
- une seconde pièce ferromagnétique sensiblement axisymétrique, et
- un élément magnétosensible,
la première et la seconde pièce ferromagnétiques statoriques définissant avec l'élément mobile ferromagnétique des premier et second entrefers radiaux respectifs, et définissant entre elles un troisième entrefer dans lequel est placé l'élément magnétosensible.

Un dimensionnement judicieux de l'ensemble statorique permettra d'obtenir une variation linéaire du champ magnétique en fonction du déplacement de l'élément ferromagnétique mobile.

Un des avantages d'utiliser une structure de révolution de ce type est que, en tout point de la course et par effet d'intégration du flux magnétique, la perméance globale vue par les différents entrefers - et par conséquent le champ mesuré par l'élément magnétosensible - sera très peu sensible aux jeux radiaux ou aux différentes rotations de l'élément mobile.

Selon une variante préférentielle, la deuxième pièce ferromagnétique statorique comportera sur son diamètre extérieur un épanouissement constituant une zone de concentration de flux permettant d'augmenter la variation de champ magnétique. Cet épanouissement pourra idéalement être limité à un arc angulaire restreint en regard de la sonde magnétosensible de manière à améliorer encore l'effet de concentration.

Cette structure présente par ailleurs l'avantage de pouvoir mesurer le déplacement d'un axe de longueur indépendante de la course et sans variation de diamètre. De manière générale, en début de course, l'extrémité de l'axe constituant l'élément ferromagnétique mobile se situera en regard de la seconde pièce ferromagnétique.

Par contre, cette structure n'étant pas symétrique, la variation de signal mesuré peut présenter un décalage, ce qui veut dire que la variation de champ magnétique le long de la course ne se fera pas autour du 0 Gauss. Si ce décalage est trop important, la programmation de la sonde magnétosensible peut s'avérer compliquée et la sensibilité du capteur à la température augmentée.

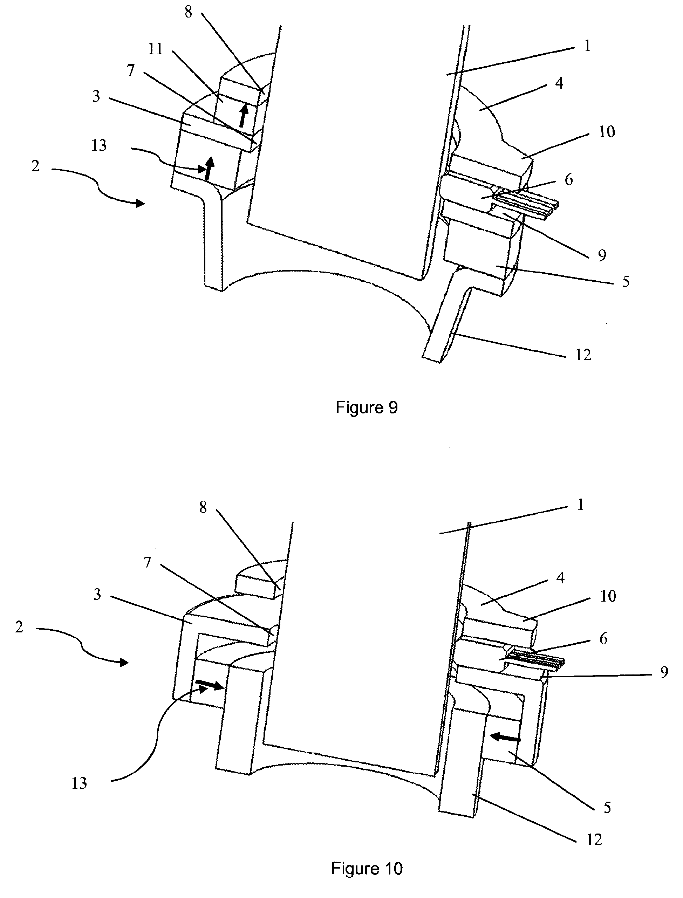

Ceci peut être compensé en allongeant l'aimant permanent ou, selon une variante (troisième variante présentée figure 9), en intégrant dans l'entrefer axial un aimant de polarisation secondaire de forme discale et aimanté axialement. Idéalement, l'aimant pourra s'étendre sur moins de 360°, de manière à permettre une intégration optimale de la sonde et de réduire le diamètre extérieur du capteur.

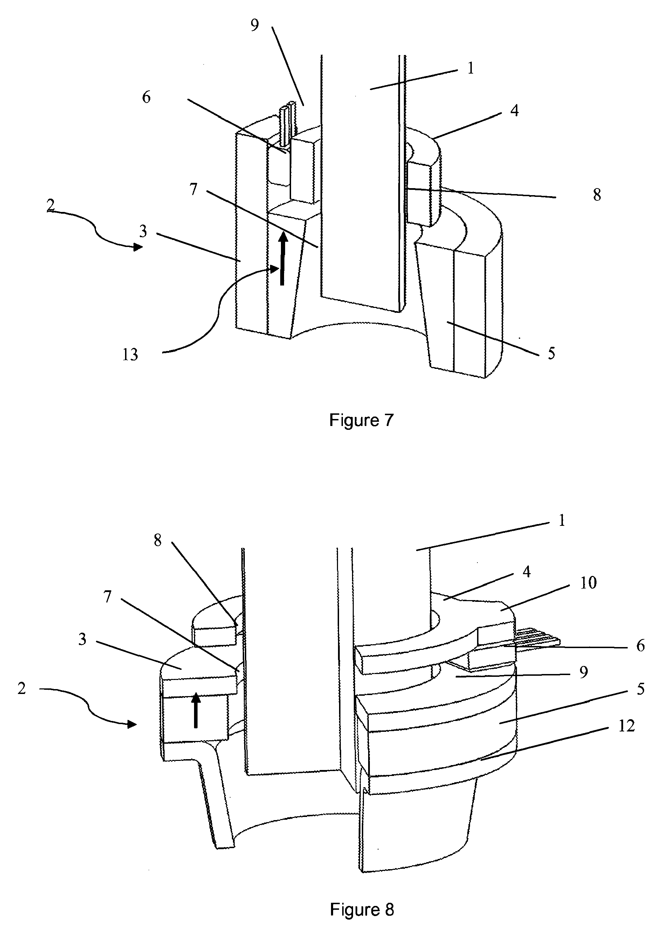

Selon une autre variante (deuxième variante présentée figure 8), une troisième pièce ferromagnétique pourra être ajoutée, soit sous l'aimant principal dans le cas où l'aimantation est axiale, soit sur le diamètre intérieur de l'aimant permanent principal dans le cas où l'aimantation est radiale. Idéalement, la troisième pièce ferromagnétique présentera un épanouissement axial de forme sensiblement conique de manière à améliorer la linéarité du capteur.

Dans tous les modes de réalisation proposés, il est aussi envisageable que les aimants aient une section sensiblement conique afin d'améliorer la linéarité du signal.

Selon un second mode de réalisation, l'invention concerne un capteur linéaire de position utilisant, outre l'élément ferromagnétique mobile dont la position est détectée, un ensemble statorique comprenant au moins :
- une première pièce ferromagnétique sensiblement axisymétrique et ayant une section longitudinale en forme de « C ».
- deux aimants permanents de forme cylindrique ou discale, solidaires respectivement de la branche inférieure et supérieure du « C », qui pourront être soit aimantés radialement et disposés sur le diamètre intérieur des branches du « C », soit aimantés axialement et disposés respectivement sous la branche supérieure et sur la branche inférieure du « C »,
- une deuxième pièce ferromagnétique de révolution autour de l'axe défini par la direction de déplacement placée entre les deux branches du « C », et
- un élément magnétosensible,

chacune des branches du «C» de la première pièce ferromagnétique statorique définissant avec l'élément mobile ferromagnétique un entrefer radial ou axial, la seconde pièce ferromagnétique statorique définissant avec l'élément mobile ferromagnétique un entrefer radial, et les deux pièces ferromagnétiques statoriques définissant entre elles un entrefer radial dans lequel est placé l'élément magnétosensible.

De manière préférentielle, les aimants seront aimantés en « série », c'est-à-dire, par exemple, dans le cas axial avec le Nord vers le haut pour les deux, ou dans le cas radial, avec le Nord vers l'intérieur pour l'un et le Nord vers l'extérieur pour l'autre, afin que les flux produits par chacun des aimants circulent dans le même sens dans le circuit magnétique formé.

Selon ce mode de réalisation, si la partie mobile occupe une position symétrique par rapport au plan perpendiculaire au déplacement passant par le milieu du « C » perpendiculaire à la direction de déplacement, le flux magnétique généré par le ou les aimants permanents va, par exemple, parcourir la section extérieure du « C » depuis la branche supérieure vers la branche inférieure, puis traverser un premier entrefer entre le « C » et l'élément mobile ferromagnétique, être guidé par cet élément puis se reboucler vers la branche supérieure du « C » en traversant un second entrefer entre le « C » et l'élément mobile ferromagnétique. Ainsi, aucun flux magnétique ne traversera les entrefers relatifs à la deuxième pièce ferromagnétique statorique, et la composante radiale mesurée par la sonde magnétosensible sera nulle (position de 0 Gauss).

Par contre, si on écarte l'élément mobile de cette position médiane, un déséquilibre va se créer et un flux magnétique parcourra le troisième et le quatrième entrefers. Ainsi, si l'élément mobile se déplace entre deux position symétriques (-Y) et (+Y) par rapport au plan médian, on pourra mesurer une variation de champ symétrique comprise entre [-B(Y)] et B(Y). Cette variation bipolaire du signal permettra ainsi d'avoir un point milieu (0 Gauss) insensible à la température, et de manière générale un capteur relativement stable en température et une programmation facilitée de la sonde magnétosensible linéaire.

Un dimensionnement judicieux de l'élément mobile et de l'ensemble statorique permettra d'obtenir une variation linéaire du champ magnétique en fonction du déplacement.

Un des avantages d'utiliser une structure de révolution de ce type est que, en tout point de la course et par effet d'intégration du flux magnétique, la perméance globale vue par le circuit magnétique formé - et par conséquent le champ mesuré par l'élément magnétosensible - sera très peu sensible aux jeux radiaux ou aux différentes rotations de l'élément mobile.

De manière préférentielle, la deuxième pièce ferromagnétique comportera sur son diamètre extérieur un épanouissement constituant une zone de concentration de flux permettant d'augmenter la variation de champ magnétique. Cet épanouissement pourra idéalement être limité à un arc angulaire restreint en regard de la sonde magnétosensible de manière à améliorer encore l'effet de concentration.

Une structure telle que réalisée selon les modes de réalisation décrits ci-dessus sera donc plus particulièrement adaptée aux configurations où l'élément mobile ferromagnétique peut évoluer de manière symétrique en regard des extrémités de l'ensemble statorique, avec une hauteur voisine de celle de l'ensemble statorique.

Cependant, il peut arriver dans certaines applications que l'élément mobile ferromagnétique soit particulièrement long du fait de la configuration mécanique (ensemble mobile intégralement constitué de la partie mobile ferromagnétique), ce qui rend impossible d'obtenir les conditions décrites ci-dessus. Il peut alors s'avérer judicieux de réduire le diamètre de la partie mobile hors des zones utiles au fonctionnement du capteur, de manière à réduire les flux de fuite qui vont tendre à générer un décalage et diminuer la variation utile du champ magnétique.

De manière générale, l'élément mobile ferromagnétique peut être associé à tout autre élément à déplacer de nature non ferromagnétique (plastique, aluminium...) et de longueur quelconque sans influence sur le champ magnétique mesuré.

Il faut aussi préciser que l'on pourrait aussi n'utiliser qu'un seul aimant permanent sans remettre en cause le principe général de cette structure. La symétrie générale ne serait alors plus particulièrement assurée, ce qui peut induire notamment un décalage sur flux magnétique signal mesuré, mais qui peut s'avérer acceptable dans certains cas.

Une structure selon ce second mode de réalisation, et plus particulièrement dans le cas d'aimant magnétisés axialement, pourra être appliquée très favorablement à un capteur de très petit déplacement (typiquement quelques dixièmes de millimètre) encapsulé. Associé à des éléments de raideur tenant également lieu de suspension, la structure selon ce second mode de réalisation pourra avantageusement être appliquée à la mesure de pression ou de vibrations.

Pour des raisons de compacité, ou si la configuration mécanique permet des jeux mécaniques réduits, il est possible de restreindre les structures selon les modes de réalisation décrites jusqu'à présent à un secteur angulaire limité.

Selon un troisième mode de réalisation, l'invention concerne un capteur rotatif de position comprenant, outre l'élément ferromagnétique mobile dont la position est détectée, un ensemble statorique comportant :
- une première pièce ferromagnétique déployée sur un secteur angulaire limité et ayant une forme de « C »,
- deux aimants permanents sous forme de tuile aimantées radialement et solidaires de chacune des branches du « C »,
- une seconde pièce ferromagnétique disposée entre l'élément mobile et la partie extérieure du « C », et
- un élément magnétosensible,
chacune des branches du « C » de la première pièce ferromagnétique statorique définissant avec l'élément mobile ferromagnétique un entrefer radial, la seconde pièce ferromagnétique statorique définissant avec l'élément mobile ferromagnétique un entrefer radial, et les deux pièces ferromagnétiques statoriques définissant entre elles un entrefer radial dans lequel est placé l'élément magnétosensible.

De manière préférentielle, les aimants seront aimantés en « série », c'est-à-dire par exemple avec le Nord vers l'intérieur pour l'un et le Nord vers l'extérieur pour l'autre, afin que les flux produits par chacun des aimants circulent dans le même sens dans le circuit magnétique formé.

Le mode de fonctionnement de cette structure sera par ailleurs identique au second mode de réalisation.

De manière préférentielle, la pièce additionnelle comportera sur son diamètre extérieur un épanouissement constituant une zone de concentration de flux permettant d'augmenter la variation de champ magnétique, cet épanouissement étant idéalement être limité à un arc angulaire restreint en regard de la sonde magnétosensible de manière à améliorer encore l'effet de concentration.

De manière générale, des structures selon les deuxième et troisième modes de réalisation décrits ci-dessus présenteront une très bonne immunité aux champs extérieurs du fait de leur structure « fermée », la sonde magnétosensible étant protégée par le circuit magnétique statorique.

Par ailleurs, les différents modes de réalisation présentés ne sont en aucun cas exclusifs et limitatifs des possibilités de réalisation de l'invention ici proposée.

D'autres caractéristiques et avantages de l'invention ressortiront à la lecture qui suit d'exemples de réalisation détaillés, en référence aux figures annexées qui représentent respectivement, pour :
- La figure 1, une structure de capteur de position linéaire selon l'art antérieur;
- la figure 2, une vue en coupe d'un capteur de position linéaire selon le premier mode de réalisation;
- la figure 3, une vue de trois-quart du capteur de position selon le premier mode de réalisation;
- les figures 4a et 4b, une vue des lignes de champ du capteur selon le premier mode de réalisation pour deux positions extrêmes de l'élément mobile;
- la figure 5, un graphe représentant la variation de champ magnétique mesurée par l'élément magnétosensible et la linéarité associée, en fonction du déplacement de l'élément mobile pour un capteur selon le premier mode de réalisation;
- la figure 6, un graphe représentant la variation de champ magnétique mesurée par l'élément magnétosensible et la linéarité associée, en fonction d'un jeu radial, pour un capteur selon le premier mode de réalisation;
- la figure 7, une vue en coupe d'un capteur selon une première variante du premier mode de réalisation;
- la figure 8, une vue de trois-quart d'un capteur selon une seconde variante du premier mode de réalisation;
- la figure 9, une vue en coupe d'un capteur selon une troisième variante du premier mode de réalisation;
- la figure 10, une vue en coupe d'un capteur selon une quatrième variante du premier mode de réalisation;
- la figure 11, une vue en coupe d'un capteur selon une cinquième variante du premier mode de réalisation;
- la figure 12, une vue en coupe d'un capteur de position linéaire selon le second mode de réalisation;
- les figures 13a et 13b, une vue des lignes de champ du capteur selon le second mode de réalisation en position médiane et extrême;
- la figure 14, un graphe représentant la variation de champ magnétique mesurée par l'élément magnéto-sensible et la linéarité associée, en fonction du déplacement de l'élément mobile pour le capteur selon le second mode de réalisation;
- la figure 15, une vue en coupe d'un capteur selon une première variante du second mode de réalisation;
- la figure 16, une vue en coupe d'un capteur de position angulaire selon une seconde variante du second mode de réalisation;
- la figure 17, une vue en coupe d'un capteur selon le troisième mode de réalisation.

La figure 1 présente une configuration selon l'art antérieur précité (FR 2 845 469), constitué d'un élément ferromagnétique (1) dont on souhaite connaître la position linéaire.

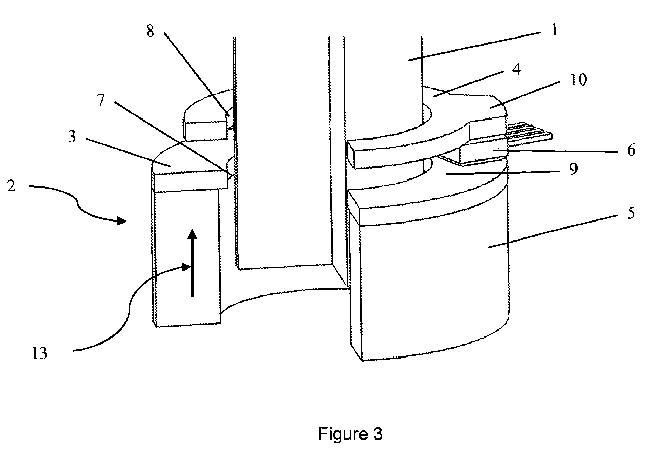

La figure 2 et la figure 3 représentent respectivement une vue en coupe et de trois-quarts d'un capteur de position linéaire selon le premier mode de réalisation de l'invention. Le capteur comprend notamment un aimant permanent (5) aimanté axialement, une première pièce ferromagnétique (3) étant placée sur cet aimant (5). L'aimant (5) représenté ici est de forme cylindrique, mais pour des raisons d'optimisation, la forme intérieure peut être légèrement conique. Une seconde pièce ferromagnétique (4) décalée axialement par rapport à la première pièce ferromagnétique (3) crée, avec la face supérieure de la pièce (3), un entrefer (9) dans lequel est inséré un élément magnéto-sensible (6). Cette seconde pièce ferromagnétique (4) comporte un épanouissement (10) qui permet une concentration du flux magnétique en regard de l'élément magnéto-sensible (6). A l'intérieur de cet ensemble statorique (2), formé des pièces (3) et (4), de l'aimant (5), et de l'élément magnéto-sensible (6), se déplace linéairement un élément ferromagnétique (1), prenant la forme d'un axe et définissant deux entrefers (7) et (8) avec l'ensemble statorique (2).

Dans ce mode de réalisation, comme dans tous les autres modes de réalisation présentés, les pièces ferromagnétiques (3) et (4) sont indépendantes et espacées l'une de l'autre. En conséquence, dans la mesure où l'aimant (5) est solidaire de la première pièce ferromagnétique (3), il est distant de la deuxième pièce ferromagnétique (4).

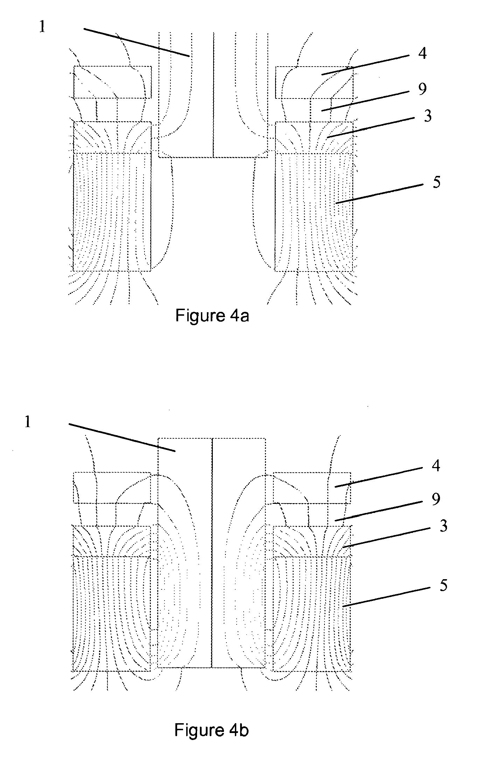

Les figures 4a et 4b représentent les lignes de champ magnétique dans le capteur de la figure 3 respectivement pour la position de début de course et pour la position de fin de course de l'élément ferromagnétique dont la position est à mesurer.

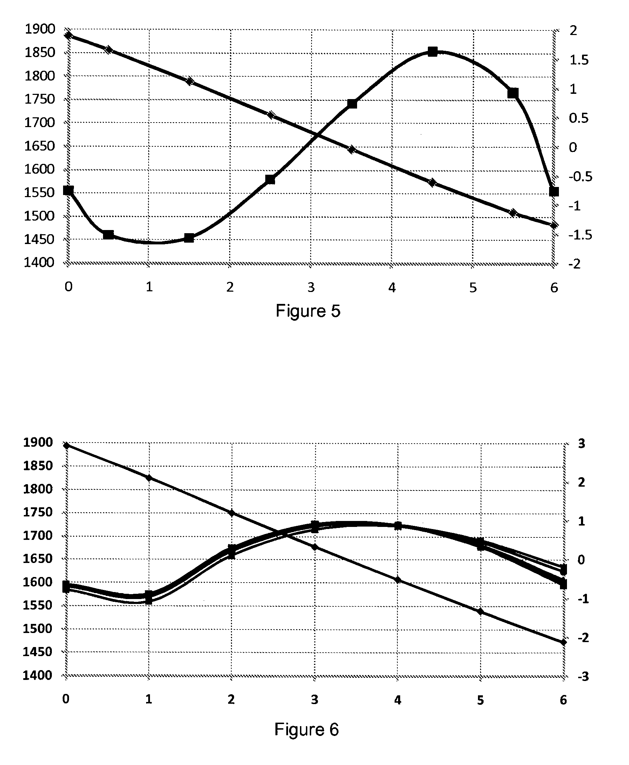

La figure 5 représente, à titre d'exemple et pour un capteur de course utile voisine de 6 mm, l'induction mesurée en Gauss (courbe avec losange et axe de gauche) par l'élément magnéto-sensible (6) en fonction de la position linéaire de l'axe ferromagnétique en millimètre et la linéarité associée en pourcent (courbe avec carrés et axe de droite) dans le cas de l'utilisation d'un capteur tel que celui de la figure 2.

La figure 6 représente, à titre d'exemple et pour un capteur de course utile voisine de 6 mm, l'induction mesurée en Gauss (courbe avec losange et axe de gauche) par l'élément magnéto-sensible (6) en fonction de la position linéaire de l'élément ferromagnétique mobile en millimètre et la linéarité associée (courbes avec carrés et axe de droite) mesurées pour plusieurs positions radiales de l'élément ferromagnétique dans le cas de l'utilisation d'un capteur tel que celui de la figure 2.

La figure 7 représente une variante du capteur dans laquelle la pièce ferromagnétique (3) est enroulée autour de l'aimant permanent (5) aimanté axialement. L'élément magnéto-sensible est placé axialement dans l'entrefer (9) de mesure formé par la première et seconde pièce ferromagnétique (3) et (4).

La figure 8 représente une variante du présent capteur. Afin de diminuer le volume d'aimant nécessaire au fonctionnement optimum du capteur, il est possible de diminuer la longueur axiale de l'aimant permanent (5) à l'aide d'une nouvelle pièce ferromagnétique (12), solidaire du premier aimant permanent (5). Cette pièce de forme sensiblement conique et axisymétrique est au contact de l'aimant permanent. Un nouvel ensemble statorique est ainsi défini par les pièces (3), (4), (5), (6) et (12).

La figure 9 représente une troisième variante du présent capteur dans lequel un second aimant (11) est introduit dans l'entrefer (9) défini entre les pièces ferromagnétiques (3) et (4). La largeur angulaire de cet aimant (11) est inférieure à 360° afin de pouvoir placer l'élément magnétosensible (6) juxtaposé. Cet aimant (11) a pour but de diminuer le décalage du signal mesuré par l'élément magnéto-sensible (6) et permettre ainsi une compensation plus facile des effets liés à la température.

La figure 10 représente une vue en coupe d'une quatrième variante du capteur. Dans cette variante, l'aimant permanent (5) est toujours un aimant bague mais aimanté radialement et non pas axialement comme dans les précédentes variantes. Dans cette variante, l'aimant (5) est également associé à une troisième pièce ferromagnétique (12).

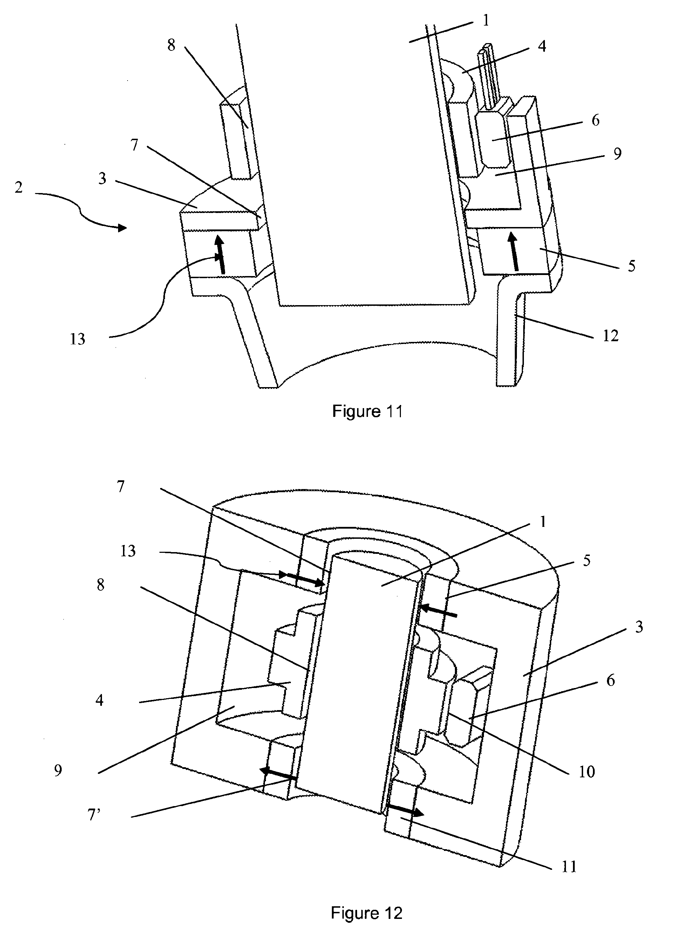

La figure 11 représente une vue en coupe d'une cinquième variante du capteur dans laquelle l'entrefer de mesure (9), dans lequel l'élément magnéto-sensible (6) est inséré, est radial. Pour des raisons de construction mécanique, cette cinquième variante peut être préférée.

La figure 12 représente une vue en coupe du capteur selon un second mode de réalisation. Dans ce second mode, l'élément ferromagnétique (1) dont la position doit être mesurée, a une longueur sensiblement égale à la distance entre les centres des deux aimants (5) et (11). L'aimant (5) est aimanté radialement vers l'intérieur et l'aimant (11) est aimanté radialement vers l'extérieur. Une première pièce ferromagnétique (3) en forme de C relie les deux aimants permanents (5) et (11) disposés de manière symétrique par rapport au plan médian perpendiculaire au déplacement passant par le milieu de ladite pièce (3). Une seconde pièce ferromagnétique axisymétrique en forme de T (4) est située à l'intérieur de la pièce en forme de C définissant un entrefer (9) entre la pièce ferromagnétique (3) et l'épanouissement (10), entrefer (9) dans lequel est logé l'élément magnéto-sensible (6) qui mesure la composante radiale de l'induction magnétique. L'élément mobile (1) se déplace axialement à l'intérieur des pièces ferromagnétiques (3) et (4) définissant ainsi 3 entrefers (7), (7') et (8).

Il est à noter que l'épanouissement (10) pourrait tout à fait être limité à un secteur angulaire en regard de l'élément magnéto-sensible (6) pour augmenter encore l'effet de concentration de champ et améliorer la variation de signal, sans conduire à une rupture significative de la symétrie du circuit magnétique.

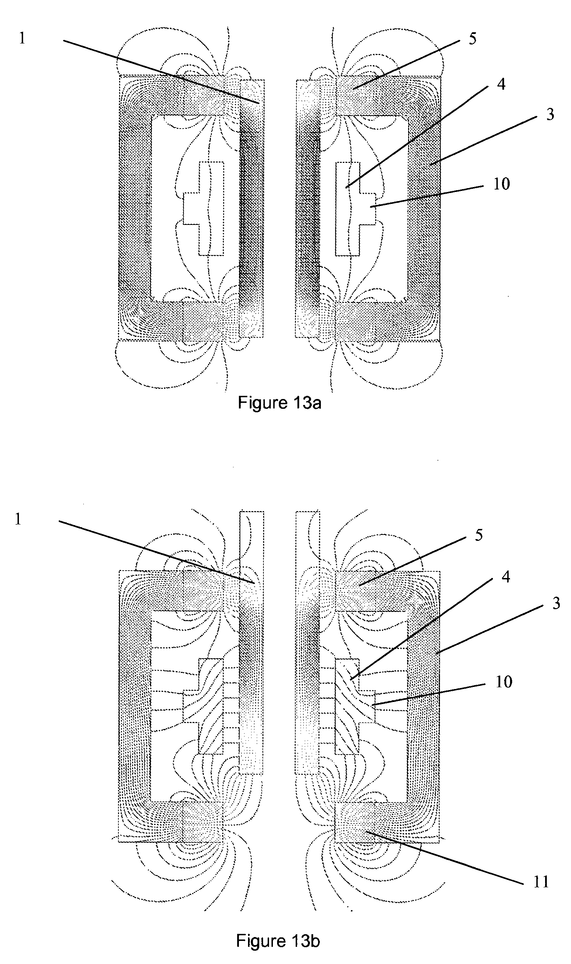

Les figures 13a et 13b représentent les lignes de champ dans le capteur respectivement pour la position médiane et la position extrême de l'élément mobile (1).

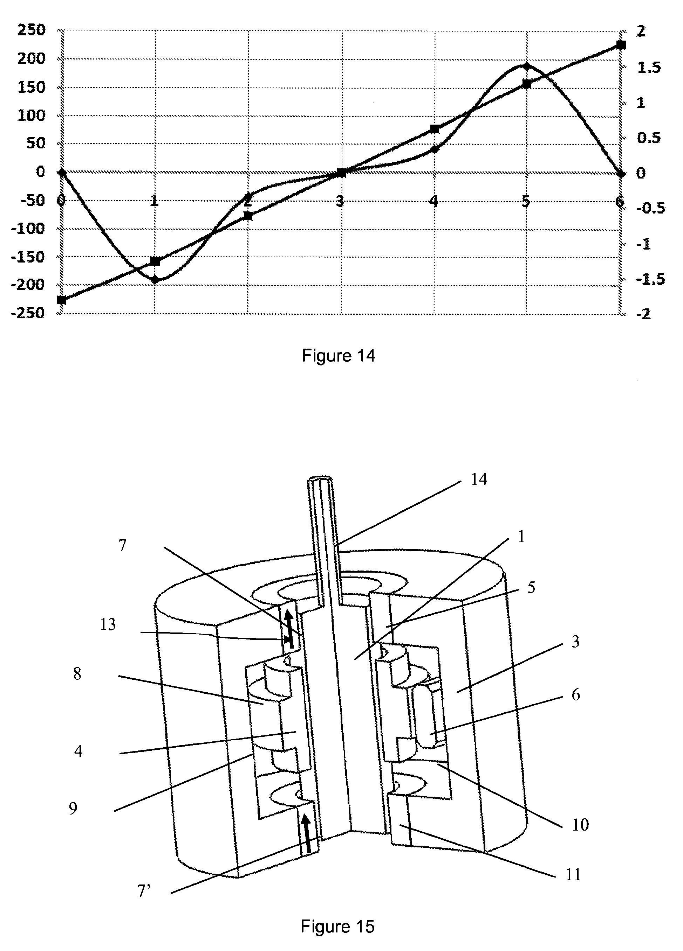

La figure 14 représente, à titre d'exemple obtenu sur un capteur de course utile voisine de 6 mm, l'induction magnétique (courbe avec carrés en Gauss sur l'axe de gauche) mesurée par l'élément magnéto-sensible (6) ainsi que la non linéarité associée (courbe avec losange en pourcent sur l'axe de droite) pour le capteur de la figure 12 et un déplacement de l'élément mobile (1) entre les deux positions extrêmes, en fonction de la position en millimètres.

La figure 15 représente une variante de la structure de la figure 12 dans laquelle l'axe ferromagnétique (1) présente une certaine longueur et un rétrécissement (14) de sa section considérée dans le plan perpendiculaire au déplacement sur une partie de sa longueur, montré ici à l'extérieur du capteur.

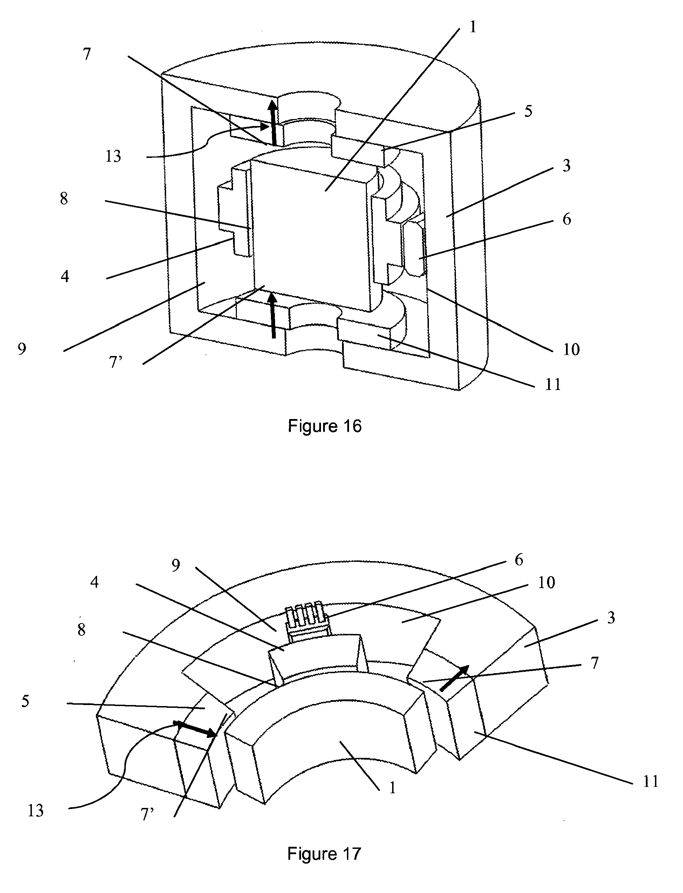

La figure 16 représente une vue en coupe d'une seconde variante du second mode de réalisation. Nous retrouvons les mêmes composants que dans le cas du capteur de la figure 12, sauf que dans ce second mode de réalisation les aimants (5) et (11) sont aimantés axialement.

La figure 17 représente un capteur de position angulaire pour des petites courses selon le troisième mode de réalisation. Nous retrouvons les mêmes composants que le capteur linéaire de la figure 12, excepté les aimants permanents (5) et (11) en forme de bague de tuile aimantés eux aussi radialement.

## Revendications

1. Capteur magnétique de position linéaire ou angulaire sans contact, comprenant au moins un ensemble statorique (2) et un élément ferromagnétique (1) mobile par rapport à l'ensemble statorique et dont la position est détectée, l'ensemble statorique (2) comprenant lui-même au moins des première et seconde pièces ferromagnétiques (3, 4), au moins un premier aimant permanent (5), et au moins un élément magnétosensible (6) soumis à un champ magnétique dépendant de la position de l'élément ferromagnétique mobile (1) et conçu pour délivrer un signal de mesure dépendant du champ magnétique auquel il est soumis, le premier aimant permanent (5) étant solidaire de la première pièce ferromagnétique (3), et les pièces ferromagnétiques (3, 4) définissant avec l'élément ferromagnétique mobile (1) au moins des premier et second entrefers (7,8), **caractérisé en ce que** le premier aimant permanent (5) est uniquement solidaire de la première pièce ferromagnétique (3), **en ce que** les deux pièces ferromagnétiques (3, 4) définissent entre elles au moins un troisième entrefer (9), et **en ce que** l'élément magnétosensible (6) est placé dans ce troisième entrefer (9).

2. Capteur magnétique sans contact selon la revendication 1 **caractérisé en ce que** l'élément magnétosensible (6) est une sonde à effet Hall sensible à l'amplitude d'au moins une des composantes du champ magnétique.

3. Capteur magnétique sans contact selon l'une quelconque des revendications précédentes, **caractérisé en ce que** l'une au moins des deux pièces ferromagnétiques (3,4) comporte un épanouissement (10) formé en regard de l'élément magnétosensible (6) et permettant une concentration du flux magnétique.

4. Capteur magnétique sans contact selon l'une quelconque des revendications précédentes, **caractérisé en ce que** l'ensemble statorique (2) comporte un second aimant permanent (11) placé dans le troisième entrefer (9) et juxtaposé à l'élément magnétosensible (6).

5. Capteur magnétique sans contact selon l'une quelconque des revendications précédentes **caractérisé en ce que** l'ensemble statorique (2) comporte une troisième pièce ferromagnétique (12) solidaire du premier aimant permanent (5).

6. Capteur magnétique sans contact selon l'une quelconque des revendications précédentes **caractérisé en ce que** l'ensemble statorique (2) comporte un premier et un second aimants permanents (5,11) solidaires de la première pièce ferromagnétique (3) et disposés de manière symétrique par rapport au plan perpendiculaire au déplacement passant par le milieu de ladite pièce (3).

7. Capteur magnétique sans contact selon la revendication 5 **caractérisé en ce que** la troisième pièce ferromagnétique (12) présente une section sensiblement conique.

8. Capteur magnétique sans contact selon l'une quelconque des revendications précédentes **caractérisé en ce qu'**au moins un des aimants permanents (5,11) présente une section sensiblement conique.

9. Capteur magnétique sans contact selon l'une quelconque des revendications précédentes **caractérisé en ce que** l'élément ferromagnétique mobile (1) présente une longueur dans le sens de son déplacement et un rétrécissement de sa section considérée dans le plan perpendiculaire au déplacement sur une partie de sa longueur.

## Patentansprüche

1. Magnetischer Sensor einer linearen oder winkelförmigen Position ohne Kontakt, umfassend wenigstens eine Statorstruktur (2) und ein ferromagnetisches Element (1), das im Verhältnis zur Statorstruktur mobil ist und dessen Position erfasst wird, wobei die Statorstruktur (2) selbst wenigstens erste und zwei ferromagnetische Teile (3, 4), wenigstens einen ersten Dauermagneten (5) und wenigstens ein magnetisch beeinflussbares Element (6) umfasst, das einem Magnetfeld unterzogen wird, das von der Position des mobilen ferromagnetischen Elements (1) abhängt und entwickelt ist, um ein Messsignal auszugeben, das von dem Magnetfeld abhängt, dem es unterzogen wird, wobei der erste Dauermagnet (5) mit dem ersten ferromagnetischen Teil (3) fest verbunden ist und die ferromagnetischen Teile (3, 4) mit dem mobilen ferromagnetischen Element (1) wenigstens erste und zweite Luftspalte (7, 8) definieren, **dadurch gekennzeichnet, dass** der erste Dauermagnet (5) nur mit dem ersten ferromagnetischen Teil (3) fest verbunden ist, und dass die zwei ferromagnetischen Teile (3, 4) untereinander wenigstens einen dritten Luftspalt (9) definieren und dass das magnetisch beeinflussbare Element (6) in diesen dritten Luftspalt (9) platziert ist.

2. Magnetischer Sensor ohne Kontakt gemäß Anspruch 1, **dadurch gekennzeichnet, dass** das magnetisch beeinflussbare Element (6) eine Halleffektsonde ist, die für die Amplitude wenigstens einer der Komponenten des Magnetfeldes sensibel ist.

3. Magnetischer Sensor ohne Kontakt gemäß einem der voranstehenden Ansprüche, **dadurch gekennzeichnet, dass** wenigstens eines der zwei ferromagnetischen Teile (3, 4) eine Ausbauchung (10) umfasst, die gegenüber dem magnetisch beeinflussbaren Element (6) geformt ist und eine Konzentration des magnetischen Flusses erlaubt.

4. Magnetischer Sensor ohne Kontakt gemäß einem der voranstehenden Ansprüche, **dadurch gekennzeichnet, dass** die Statorstruktur (2) einen zweiten Dauermagneten (11) umfasst, der in den dritten Luftspalt (9) platziert ist und neben dem magnetisch beeinflussbaren Element (6) liegt.

5. Magnetischer Sensor ohne Kontakt gemäß einem der voranstehenden Ansprüche, **dadurch gekennzeichnet, dass** die Statorstruktur (2) ein drittes ferromagnetisches Teil (12) umfasst, das mit dem ersten Dauermagneten (5) fest verbunden ist.

6. Magnetischer Sensor ohne Kontakt gemäß einem der voranstehenden Ansprüche, **dadurch gekennzeichnet, dass** die Statorstruktur (2) einen ersten und einen zweiten Dauermagneten (5, 11) umfasst, die mit dem ersten ferromagnetischen Teil (3) fest verbunden sind und symmetrisch im Verhältnis zur lotrechten Ebene zur Verschiebung angeordnet sind, die durch die Mitte des genannten Teils (3) hindurchtritt.

7. Magnetischer Sensor ohne Kontakt gemäß Anspruch 5, **dadurch gekennzeichnet, dass** das dritte ferromagnetische Teil (12) einen deutlich konischen Querschnitt aufweist.

8. Magnetischer Sensor ohne Kontakt gemäß einem der voranstehenden Ansprüche, **dadurch gekennzeichnet, dass** wenigstens einer der Dauermagneten (5, 11) einen deutlich konischen Querschnitt aufweist.

9. Magnetischer Sensor ohne Kontakt gemäß einem der voranstehenden Ansprüche, **dadurch gekennzeichnet, dass** das mobile ferromagnetische Element (1) eine Länge in der Richtung seiner Verschiebung und eine Verjüngung seines Querschnitts aufweist, der in der lotrechten Ebene zur Verschiebung auf einem Teil seiner Länge betrachtet wird.

## Claims

1. A contactless magnetic sensor for detecting a linear or angular position, comprising a stator assembly (2) and a ferromagnetic element (1) moveable relative to the stator assembly and the position of which is detected, with the stator assembly (2) itself comprising at least a first and a second ferromagnetic part (3, 4), at least a first permanent magnet (5), and at least a magneto-sensitive element (6) subjected to a magnetic field that depends on the position of the moveable ferromagnetic element (1) and designed to deliver a measurement signal that depends on the magnetic field to which it is subjected, with the first permanent magnet (5) being rigidly connected to the first ferromagnetic part (3), and the ferromagnetic parts (3, 4) defining with the moveable ferromagnetic element (1) at least a first and a second air gap (7, 8), **characterized in that** the first permanent magnet (5) is rigidly connected only to the first ferromagnetic part (3), **in that** the two ferromagnetic parts (3, 4) define therebetween at least a third air gap (9), and **in that** the magneto-sensitive element (6) is placed in the third air gap (9).

2. A contactless magnetic sensor according to claim 1, **characterized in that** the magneto-sensitive element (6) is a Hall-effect probe sensitive to the amplitude of at least one of the components of the magnetic field.

3. A contactless magnetic sensor according to any one of the preceding claims, **characterized in that** at least one of the two ferromagnetic parts (3, 4) includes an enlargement (10) formed opposite the magneto-sensitive element (6) and enabling a concentration of the magnetic flux.

4. A contactless magnetic sensor according to any one of the preceding claims, **characterized in that** the stator assembly (2) includes a second permanent magnet (11) positioned in the third air gap (9) and juxtaposed to the magneto-sensitive element (6).

5. A contactless magnetic sensor according to any one of the preceding claims, **characterized in that** the stator assembly (2) includes a third ferromagnetic part (3) rigidly connected to the first permanent magnet (5).

6. A contactless magnetic sensor according to any one of the preceding claims, **characterized in that** the stator assembly (2) includes a first and a second permanent magnet (5, 11) rigidly connected to the first ferromagnetic part (3) and positioned symmetrically relative to the plane perpendicular to the movement passing through the middle of said part (3).

7. A contactless magnetic sensor according to claim 5, **characterized in that** the third ferromagnetic part (12) has a substantially conical section.

8. A contactless magnetic sensor according to any one of the preceding claims, **characterized in that** at least one of the permanent magnets (5, 11) has a substantially conical section.

9. A contactless magnetic sensor according to any one of the preceding claims, **characterized in that** the moveable ferromagnetic element (1) has a length in the direction of the movement thereof and a narrowed considered section in the plane perpendicular to the movement, on a part of the length thereof.
